# EUROPÄISCHE PATENTSCHRIFT

(11) **EP 2 274 392 B1**
(45) Veröffentlichungstag und Bekanntmachung des Hinweises auf die Patenterteilung: **20.07.2016**
(21) Anmeldenummer: 09738215.4
(22) Anmeldetag: 30.04.2009
(51) Int. Cl.: C09J 7/02

(54) **VERWENDUNG EINER HAFTKLEBEMASSE IN EINEM HAFTKLEBSTREIFEN AUS MINDESTENS EINER SCHICHT, DER SICH DURCH DEHNENDES VERSTRECKEN IM WESENTLICHEN IN DER VERKLEBUNGSEBENE RÜCKSTANDS- UND ZERSTÖRUNGSFREI WIEDER ABLÖSEN LÄSST**
USE OF A CONTACT ADHESIVE MASS IN A CONTACT ADHESIVE TAPE HAVING AT LEAST ONE LAYER, SAID TAPE BEING REMOVABLE WITHOUT LEAVING RESIDUE AND WITHOUT DAMAGE BY SUBSTANTIALLY EXPANDING IN THE PLANE OF ADHESION
UTILISATION D'UNE MATIÈRE AUTO-ADHÉSIVE DANS UN RUBAN AUTO-ADHÉSIF COMPOSÉ D'AU MOINS UNE COUCHE, QUI PEUT ÊTRE DÉCOLLÉ PAR ÉTIRAGE ESSENTIELLEMENT DANS LE PLAN DE COLLAGE SANS LAISSER DE RÉSIDUS ET SANS ALTÉRER LE SUPPORT

(30) Priorität: 30.04.2008 DE 102008021740
(43) Veröffentlichungstag der Anmeldung: 19.01.2011
(73) Patentinhaber: tesa SE, 22848 Norderstedt (DE)
(72) Erfinder: MÜSSIG, Bernhard, 21218 Seevetal (DE)
(86) Internationale Anmeldenummer: PCT/EP2009/055265
(87) Internationale Veröffentlichungsnummer: WO 2009/133171

(56) Entgegenhaltungen:
- DE-A1- 10 003 318

## Beschreibung

Die Erfindung betrifft die Verwendung einer Haftklebemasse in einem Haftklebstreifen aus mindestens einer Schicht, der sich durch dehnendes Verstrecken im Wesentlichen in der Verklebungsebene rückstands- und zerstörungsfrei wieder ablösen lässt und der hoch alterungsstabil ist.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus US 4,024,312 A, DE 33 31 016 C2, WO 92/11332 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als stripfähige Selbstklebebänder bezeichnet.

Eingesetzt werden solche stripfähigen Selbstklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Selbstklebebänder finden sich unter anderem in DE 42 33 872 C1, DE 195 11 288 C1, US 5,507,464 A, US 5,672,402 A und WO 94/21157 A1. Spezielle Ausführungsformen sind auch in der DE 44 28 587 C1, DE 44 31 914 C1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 C1, DE 197 56 816 C1, DE 198 42 864 A1, DE 198 42 865 A1, WO 99/31193 A1, WO 99/37729 A1, WO 99/63018 A1, WO 00/12644 A1 und DE 199 38 693 A1 beschrieben.

Bevorzugte Einsatzgebiete vorgenannter stripfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Sie ersetzen hierbei klassische Befestigungsmittel wie zum Beispiel Stecknadeln, Pin-Nadeln, Heftzwecken, Nägel, Schrauben, klassische Selbstklebebänder und Flüssigklebstoffe. Wesentlich für den erfolgreichen Einsatz der oben genannten Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung im Wohn-, Arbeits- und Bürobereich dienen zu können.

Obwohl in der oben zitierten Literatur eine breite Palette von Haftklebemassen für die Verwendung in stripfähigen Selbstklebebändern beschrieben werden, weisen aktuell im Markt befindliche Handelsprodukte (zum Beispiel tesa® Powerstrips® der tesa AG, 3M Command® Adhesive Klebstreifen der Firma 3M sowie Plastofix® Formuli Force 1000 Klebestreifen der Firma Plasto S.A.) sämtlich Haftklebemassen auf Basis von Styrolblockcopolymeren auf.

Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ- und/oder lineare Styrol-Butadien-Styrol (SBS)- und/oder lineare Styrol-Isopren-Styrolblockcopolymere (SIS). Vorteile der vorgenannten styrolblockcopolymerbasierenden Haftklebemassen für den Einsatz in stripfähigen Selbstklebebändern sind zum Beispiel die mit ihnen erreichbaren sehr hohen Verklebungsfestigkeiten (bedingt unter anderem durch die gleichzeitige Realisierung einer sehr hohen Kohäsion und sehr hoher Klebkräfte), eine ausgeprägte Reduzierung der Haftklebrigkeit beim verstreckenden Ablösen (welches den Ablöseprozess deutlich erleichtert oder gar erst ermöglicht) sowie eine sehr hohe Zugfestigkeit, die insbesondere für einen reißerfreien Ablöseprozess wesentlich ist.

Ein Nachteil der meisten im Markt erhältlichen Produkte mit Haftklebemassen auf Basis oben genannter Styrolblockcopolymere ist ihre geringe Alterungsstabilität, insbesondere ihre geringe UV-Stabilität. Diese ist wesentlich durch den Einsatz von Styrolblock-copolymeren mit im Elastomerblock ungesättigten Polydienblöcken (Polybutadien, Polyisopren) verursacht. Wohl lassen sich den verwendeten Haftklebemassen Alterungsschutzmittel in Form von zum Beispiel primären Antioxidantien, sekundären Antioxidantien, C-Radikalfängern, Lichtschutzmitteln wie zum Beispiel UV-Absorbern, sterisch gehinderten Aminen oder schädigende elektromagnetische Strahlung reflektierende oder streuende Additive, zum Beispiel in Form von Füllstoffen und/oder Farbpigmenten, zusetzen, jedoch bewirken entsprechende Zusätze zumeist nur eine graduelle Verbesserung der Alterungsstabilität, so dass Alterungsprozesse lediglich für eine begrenzte Zeit herausgezögert werden.

Im Vergleich zu Polymeren auf Basis ungesättigter Kohlenwasserstoffe bleibt die erreichte Alterungsstabilität, insbesondere die realisierte UV-Stabilität jedoch gering. Zum Beispiel verkleben oben genannte im Handel erhältliche Selbstklebestreifen bei Fixierung auf Fensterglas nach schon wenigen Wochen Sonnenlichtexposition derartig stark mit der Glasoberfläche, dass ein rückstandsfreies Wiederablösen durch dehnendes Verstrecken nicht mehr möglich ist.

Demgemäß wird empfohlen, den tesa® Powerstrips® nicht auf Fensterscheiben zu verkleben, weil die Wiederablösbarkeit des Powerstrips® durch Sonneneinstrahlung beeinträchtigt wird. Der japanischen Verpackungsinformation der Klebestreifen "Command® Adhesive" kann entnommen werden, dass Fensterscheiben, die dem Sonnenlicht ausgesetzt sind, als Untergrund nicht geeignet sind.

Eine Möglichkeit zur Erhöhung der Alterungsbeständigkeit und insbesondere der UV-Stabilität bei Nutzung von Styrolblockcopolymeren besteht im Einsatz von im Elastomerblock hydrierten Styrolblockcopolymeren, wie es zum Beispiel in Styrol-Ethylen/Butylen-Styrol- (SEBS; erhalten durch Hydrierung von SBS) und/oder Styrol-Ethylen/Propylen-Styrol- (SEPS; erhalten durch Hydrierung von SIS) Blockcopolymeren verwirklicht ist.

Nachteil des Einsatzes entsprechender im Elastomerblock hydrierter Styrolblockcopolymere ist jedoch, dass die mit selbigen zu realisierenden Verklebungsfestigkeiten erfahrungsgemäß deutlich unterhalb derer liegen, welche mit den analogen nicht im Elastomerblock hydrierten Styrol-Butadien-Styrol- und Styrol-Isopren-Styrol-Blockcopolymeren erreicht werden. Dies gilt insbesondere dann, wenn in den zum Einsatz kommenden Klebstoffformulierungen die Zugabe von Plastifizierungsmitteln wie Flüssigharzen, Weichmacherölen, niedermolekularen flüssigen Polyolefinen und ähnlichem gering gehalten oder gänzlich auf diese Materialien verzichtet werden muss. Dies kann unter anderem dann der Fall sein, wenn die vorgenannten Klebmassebestandteile die Neigung besitzen, aus der Haftklebemasse heraus in die verklebten Substrate zu migrieren und diese irreversibel zu verändern, ein Verhalten, welches gerade für Klebestreifen, die für das rückstands- und zerstörungsfreie Wiederablösen von Verklebungen konzipiert sind, nicht akzeptabel ist.

Ein weiterer Nachteil der Verwendung von Haftklebemassen auf Basis von im Elastomerblock ungesättigten Styrolblockcopolymeren ist die Tatsache, dass diese zur Verbesserung ihrer UV-Stabilität und/oder zur Maskierung von Farbstichen, die zum Beispiel durch die verwendeten Klebharze verursacht sein können, häufig pigmentiert werden. Typische Pigmente, die die UV-Stabilität verbessern und der Haftklebemasse gleichfalls ein neutrales weißes oder gezielt farbiges Erscheinungsbild geben, umfassen zum Beispiel unterschiedliche Titandioxide oder anorganische und organische Farbpigmente.

Nachteilig an entsprechenden Pigmentierungen ist, dass die mit ihnen ausgerüsteten Haftklebemassen im Allgemeinen keine optische Transparenz und keine Farblosigkeit besitzen. Als Konsequenz der Pigmentierung der Haftklebemasse ergibt sich zum Beispiel ein deutlich sichtbarer Anfasserbereich, welcher häufig vom Anwender infolge seines Herausstehens aus der Klebfuge als optisch störend empfunden wird, oder auch ein durch die Pigmentierung in seiner gesamten Fläche sichtbarer Haftklebestreifen, welcher zum Beispiel bei der Fixierung transparenter Substrate als optisch störend wahrgenommen wird.

Ein weiterer Nachteil nicht transparenter Klebestreifen ist die fehlende Möglichkeit, bei Verklebung eines oder zweier transparenter Verklebungspartner die makroskopisch erreichte Verklebungsfläche durch beide Klebschichten hindurch leicht optisch detektieren zu können, die gerade im Fall kritischer Verklebungen eine wichtige Aussage zur Qualität der erreichten Verklebungsgüte ist.

Zahlreiche Ansätze sind verfolgt worden, um eine Unsichtbarkeit des zum Ablösen durch dehnendes Verstrecken benötigten nicht haftklebrigen Anfasserbereiches zu erreichen. So beschreibt etwa die WO 98/03601 A1 einen stripfähigen Klebestreifen, der an einem Klebestreifenende eine etwa mittig in die Klebmasseschicht integrierte Kunststofffolie, zum Beispiel eine Polyesterfolie, enthält. Im Bereich der integrierten Kunststofffolie ist die Klebstoffoberfläche beidseitig nicht haftklebrig eingestellt, etwa durch Aufkaschieren weiterer Kunststofffolien oder mittels Lackierung. US 5,925,459 A beschreibt die Verwendung eines durch dehnendes Verstrecken wiederablösbaren Selbstklebestreifens, welcher eine transparente elastische Kunststofffolie als Zwischenträger nutzt. Durch ihren elastischen Charakter vermag sich die Zwischenträgerfolie beim Ablöseprozess der Deformation der Haftklebemasse anzupassen. Nicht mit Haftklebemasse beschichtete Bereiche der Zwischenträgerfolie dienen als nicht haftklebrige transparente Anfasserbereiche, von denen aus der Ablöseprozess durchgeführt werden kann.

Zahlreiche der oben genannten Dokumente beinhalten die Verwendung von Haftklebemassen, die im Allgemeinen eine hohe Transparenz und gleichzeitig eine hohe Alterungsstabilität, insbesondere eine sehr hohe UV-Stabilität aufweisen. So offenbaren zum Beispiel die WO 92/11332 A1, WO 92/11333 A1 und die DE 195 31 696 A1 die Verwendung von Haftklebemassen auf Basis von Acrylatcopolymeren. Von selbigen ist jedoch bekannt, dass die mit ihnen im allgemeinen zu realisierenden Verklebungsfestigkeiten sowie insbesondere die erreichbaren Höchstzugkräfte deutlich unterhalb der Werte liegen, die mit styrolblockcopolymerbasierenden Haftklebemassen zu realisieren sind. Damit scheiden entsprechende Haftklebemassen insbesondere bei der Nutzung in einschichtigen stripfähigen Selbstklebebändern vollständig aus, da in diesem Fall sehr hohe Höchstzugkräfte für einen sicheren Ablöseprozess unabdingbar sind.

DE 42 22 849 C1, DE 197 08 366 A1, DE 196 49 727 A1, DE 196 49 728 A1 und DE 196 49 729 A1 beschreiben die Nutzung von Styrolblockcopolymeren auf Basis von SEBS und/oder SEPS, mithin die Nutzung von im Elastomerblock chemisch gesättigten Styrolblockcopolymeren. Jedoch lassen sich erfahrungsgemäß mit herkömmlichen Styrolblockcopolymeren auf Basis von SEBS und/oder SEPS keine Haftklebemassen erzeugen, die gleichzeitig über eine hohe Zugfestigkeit, ausgezeichnete Schälfestigkeiten, hohe Kippscherfestigkeiten und niedrige Ablösekräfte (Stripkräfte) verfügen.

Eine transparente UV-stabile Klebmasse mit erhöhter Verklebungsfestigkeit, die für den Einsatz in stripfähigen Klebfolienstreifen geeignet ist, ist in DE 100 03 318 A1 beschrieben.

Durch den Einsatz eines speziellen Styrolblockcopolymers auf Basis eines hydrierten Mittelblocks, der nicht-hydrierte polymere Seitenketten enthält, können Klebmassen für stripfähige Klebfolienstreifen hergestellt werden.

Für eine Verklebung von schwereren Gegenständen wie Haken für Handtücher oder Textilien sind oben beschriebene Klebmassen allerdings nicht geeignet, da die Klebleistung zwar gegenüber Klebmassen aus SEBS oder SEPS deutlich erhöht ist, aber noch erheblich unter der Verklebungsleitung von Klebmassen auf der Basis von SIS oder SBS liegt.

Aufgabe der Erfindung ist es daher, einen Haftklebstreifen mit einer Klebemasse zu schaffen, der sowohl UV-stabil ist und eine höhere Klebleistung aufweist als bisherige insbesondere transparente UV-stabile stripfähige Systeme und der möglichst transparent ist.

Gelöst wird diese Aufgabe erfindungsgemäß durch die Verwendung einer Haftklebemasse in einem Haftklebstreifen aus mindestens einer Schicht, der sich durch dehnendes Verstrecken im Wesentlichen in der Verklebungsebene rückstands- und zerstörungsfrei wieder ablösen lässt, wie er im Hauptanspruch niedergelegt ist Gegenstand der Unteransprüche sind dabei vorteilhafte Weiterbildungen des Haftklebstreifens.

Demgemäß betrifft die Erfindung die Verwendung einer Haftklebemasse in einem Haftklebstreifen aus mindestens einer Schicht, der sich durch dehnendes Verstrecken im Wesentlichen in der Verklebungsebene rückstands- und zerstörungsfrei wieder ablösen lässt, wobei mindestens eine Schicht aus der Haftklebemasse gebildet wird, die besteht aus
- einem Ethylenpolymeren mit einer Dichte zwischen 0,86 und 0,89 g/cm³, vorzugsweise zwischen 0,86 und 0,88 g/cm³, besonders bevorzugt zwischen 0,86 und 0,87 g/cm³ und einem Kristallitschmelzpunkt von mindestens 105 °C, vorzugsweise mindestens 115 °C und
- mindestens einem Klebharz.

Das Ethylenpolymer weist einen Schmelzindex von weniger als 6 g/10 min, bevorzugt weniger als 1,5 g/10 min und insbesondere weniger als 0,6 g/10 min auf oder der Biegemodul des Ethylenpolymers beträgt weniger als 26 MPa, bevorzugt weniger als 17 MPa oder das Ethylenpolymer enthält ein C₃- bis C₁₀-Olefin, insbesondere 1-Octen als Comonomer. Das Ethylenpolymer weist bevorzugt eine Struktur aus kristallinen Polyethylenblöcken und im Wesentlichen amorphen Blöcken aus Ethylen und einem C₃- bis C₁₀-Olefin auf.

Das erfindungsgemäße Ethylenpolymer kann mit den bei Kautschukmassen bekannten Elastomeren wie Naturkautschuk oder Synthesekautschuken kombiniert werden. Vorzugsweise werden ungesättigte Elastomere wie Naturkautschuk, SBR, NBR oder ungesättigte Styrolblockcopolymere nur in geringen Mengen oder besonders bevorzugt gar nicht verwendet. In der Hauptkette gesättigte Synthesekautschuke wie Polyisobutylen, Butylkautschuk, EPM, HNBR, EPDM oder hydrierte Styrolblockcopolymere werden für den Fall einer gewünschten Modifikation bevorzugt.

Es stellte sich überraschenderweise heraus, dass Klebrigkeit (Tack) und Klebkraft bei der polyethylenbasierten Klebemasse im Gegensatz zu konventionellen Kautschukmassen von der Polydispersität des Harzes extrem abhängig sind.

Die Polydispersität ist das Verhältnis von Gewichtsmittel zu Zahlenmittel der Molmassenverteilung und kann durch Gelpermeationschromatographie ermittelt werden. Als Klebharz werden daher solche mit einer Polydispersität von weniger als 2,1, vorzugsweise weniger als 1,8, besonders bevorzugt weniger als 1,6 eingesetzt. Der höchste Tack ist mit Harzen mit einer Polydispersität von 1,0 bis 1,4 zu erreichen.

Als Klebharz hat sich herausgestellt, dass Harze auf Basis von Kolophonium (zum Beispiel Balsamharz) oder Kolophoniumderivaten (zum Beispiel disproportioniertes, dimerisiertes oder verestertes Kolophonium), vorzugsweise partiell oder vollständig hydriert, gut geeignet sind. Sie weisen von allen Klebharzen den höchsten Tack (Klebrigkeit, Anfassvermögen) auf, vermutlich liegt das an der geringen Polydispersität von 1,0 bis 1,2. Terpenphenolharze sind ebenfalls geeignet, führen aber zu nur mäßigem Tack aber dafür zu sehr guter Scherfestigkeit und zu guter Alterungsbeständigkeit.

Bevorzugt werden ebenfalls Kohlenwasserstoffharze, die vermutlich aufgrund Ihrer Polarität gut verträglich sind. Dies sind zum Beispiel aromatische Harze wie Cumaron-Inden-Harze oder Harze auf Basis Styrol oder α-Methylstyrol oder cycloaliphatische Kohlenwasserstoffharze aus der Polymerisation von C₅-Monomeren wie Piperylen aus oder C₅- oder C₉-Fraktionen von Crackern oder Terpenen wie ß-Pinen oder δ-Limonen oder Kombinationen hiervon, vorzugsweise partiell oder vollständig hydriert, und Kohlenwasserstoffharze gewonnen durch Hydrierung von aromatenhaltigen Kohlenwasserstoffharzen oder Cyclopentadien-Polymeren. Hydrierte Harze haben den Vorteil einer höheren UV-Stabilität und Transparenz (weniger Gelbstichigkeit).

Geeignet sind auch Harze auf Basis von Polyterpenen, vorzugsweise partiell oder vollständig hydriert.

Des Weiteren ist auch ein Gemisch der genannten Harze vorteilhaft.

Die Klebemasse enthält vorzugsweise einen flüssigen Weichmacher wie beispielsweise Mineralöl (aromatisch oder Weißöl), Ester der Phthal-, Trimellit-, Zitronen- oder Adipinsäure, Wollwachs, flüssige Kautschuke (zum Beispiel niedermolekulare Nitril-, Butadien- oder Polyisoprenkautschuke), flüssige Polymerisate aus reinem Isobuten oder Isobuten-Buten-Copolymer, Flüssig- und Weichharze mit einem Schmelzpunkt unter 40 °C auf Basis der Rohstoffe von Klebharzen, insbesondere der oben aufgeführten Klassen an Klebharz. Besonders bevorzugt werden flüssige Polymerisate aus reinem Isobuten und vor allem Copolymere aus Isobuten und Buten. Mineralöle und Ester-Weichmacher eignen sich zwar sehr gut, um das Ethylenpolymer klebrig einzustellen, können aber Rückstände beim Abziehen und Veränderungen der verklebten Substrate zum Beispiel durch Wanderung von Weichmacher in verklebte Substrate wie Polystyrol verursachen.

Anstelle eines flüssigen Weichmachers kann auch ein sehr weiches und kaum kristallines Ethylenpolymer verwendet werden. Dieses ist vorzugsweise ein Copolymer aus Ethylen und Buten-(1), Hexen-(1) oder Octen-(1), zum Beispiel unter den Handelsnamen Exact®, Engage®, Vistamaxx® oder Tafmer® bekannt, oder ein Terpolymer aus Ethylen, Propylen und Buten-(1), Hexen-(1) oder Octen-(1), wobei der Biegemodul vorzugsweise unter 10 MPa und der Kristallitschmelzpunkt vorzugsweise unter 50 °C liegt. Weitere bevorzugte Ethylenpolymere sind ölfreie EPM oder EPDM, also Co- oder Terpolymere aus Ethylen und Propylen und optional einem Dien wie Ethylidenenorbornen, vorzugsweise mit einem Ethylengehalt von 40 bis 70 Gew.-%, einer Mooney-Viskosität (Bedingungen 1+4, 125 °C) unter 50 und/oder einer Dichte unter 0,88 g/cm³, besonders bevorzugt unter 0,87 g/cm³. Da solche Ethylenpolymere zwar sehr weich - verglichen mit einem flüssigen Weichmacher - sind, sollte die Menge im Verhältnis zum erfindungsgemäßen Ethylenpolymer sehr hoch sein, also deutlich über 100 phr.

Zur Optimierung der Eigenschaften kann die zum Einsatz kommende Selbstklebemasse mit Additiven wie Antioxidantien, Füllstoffen, Flammschutzmitteln, Pigmenten, UV-Absorbern, Antiozonantien, Metalldesaktivatoren Lichtschutz-, Flamm-, Photoinitiatoren, Vernetzungsmitteln oder Vernetzungspromotoren abgemischt sein.

Konventionelle Klebmassen auf Basis Naturkautschuk oder ungesättigten Styrolblockcopolymeren als Elastomerkomponente enthalten üblicherweise ein phenolisches Antioxidans zur Vermeidung des oxidativen Abbaus dieser Elastomerkomponente mit Doppelbindungen in der Polymerkette. Die im erfindungsgemäßen Haftklebstreifen verwendete Klebemasse enthält jedoch ein Ethylenpolymer ohne oxidationsempfindliche Doppelbindungen und kann daher ohne primäres oder sekundäres Antioxidans und ohne UV-Stabilisator oder UV-Absorber auskommen. Zur Sicherheit werden vorzugsweise trotzdem ein primäres Antioxidans, ein sekundäres Antioxidans, ein Lichtschutzmittel und/oder ein UV-Absorber (wie sie zum Beispiel unter den Handelsnamen Chimassorb und Tinuvin bekannt sind) in der Klebemasse eingesetzt. Besonders bevorzugt sind aminische Lichtschutzmittel, die der Fachmann als HALS bezeichnet.

Geeignete Füllstoffe und Pigmente für die Klebemasse sind beispielsweise Ruß, Titandioxid, Calciumcarbonat, Zinkcarbonat, Zinkoxid, Silicate oder Kieselsäure.

Gemäß einer weiteren vorteilhaften Ausführungsform der Erfindung ist wenigstens eine in H₂O quellbare Verbindung in die Haftklebemasse eingearbeitet.

Die in H₂O quellbare Verbindung verlangsamt ein Eindringen von Feuchtigkeit in die Grenzfläche zwischen Haftklebstreifen und Untergrund. Eine solche in H₂O quellbare Verbindung kann zum Beispiel ein Hydrogel sein. Hydrogele sind Wasser enthaltende Gele auf der Basis hydrophiler, aber wasserunlöslicher Polymere, die als dreidimensionale Netzwerke vorliegen. Die Polymere quellen in Wasser bis zu einem Gleichgewichtsvolumen unter Formerhaltung auf.

Die in H₂O quellbare Verbindung kann ein Superabsorber sein. Superabsorber sind vernetzte oder teilweise vernetzte, hydrophile Polymere, die ein Vielfaches ihres Eigengewichtes an Flüssigkeit binden und dieses auch unter Einwirkung einer äußeren Kraft festhalten können. Durch eine Aufnahme von Wasser oder wässriger Lösung bilden Superabsorber eine gelartige Konsistenz.

Der Superabsorber ist bevorzugt in einem Bereich zwischen 0,5 bis 20 Gew.-% und besonders bevorzugt zwischen 2 bis 8 Gew.-% bezogen auf die Haftklebemasse enthalten. Die Zugabe geringer Menge an Superabsorber hat den Vorteil, dass die mechanischen und klebtechnischen Eigenschaften der Haftklebestreifen auf trockenen Untergründen nicht in der Art verändert werden, dass der eigentliche Einsatzzweck eingeschränkt wird.

Ein einziger Superabsorber oder ein Gemisch mehrerer Superabsorbern ist vorzugsweise in die Haftklebemasse eingearbeitet.

Diese Superabsorber können vorzugsweise auf unterschiedlicher chemischer Basis eingesetzt werden, wie zum Beispiel Natriumsalze vernetzter Polyacrylsäure (zum Beispiel Favor® der Firma Stockhausen, Sanwet® der Firmen Hoechst und Sanyo, Drytech® der Firma Dow Chemicals, Aqualic der Firma BASF oder zum Beispiel Norsocryl der Firma Atochem), stärkemodifizierte vernetzte Polyacrylsäure (ebenfalls unter dem Namen Sanwet® von den Firmen Höchst und Sanyo angeboten), vernetzter Polyacrylamide, vernetzter Polysulfonsäure oder Carboxymethylcellulose. Die Superabsorber sind in der Lage, Wasser aufzunehmen, und quellen dabei auf. Durch ihre vernetzte Struktur lassen sie sich nicht in organischen Lösungsmitteln lösen und auch nicht in der Hitze aufschmelzen. Die Superabsorbenzien verändern deshalb bei der Einarbeitung in die Klebemasse, sei es durch Ausstreichen aus Lösungsmitteln oder durch Extrusion aus der Schmelze, nicht ihre chemische Struktur. Die Superabsorber verhalten sich in der Klebemasse wie polymere Füllstoffe. Daher haben die Superabsorber in geringem Anteil auch keinen Einfluss auf die mechanischen Eigenschaften von mit der Haftklebemasse gebildeten Haftklebestreifen. Die klebtechnischen Eigenschaften im Trockenen zeigen ebenfalls keinen Einfluss bei der Zugabe eines Superabsorbers.

Schon in einer Konzentration von 0,5 Gew.-% Superabsorbens bezogen auf die Gesamtklebemasse ist eine deutliche Verringerung bei der Feuchtigkeitsempfindlichkeit zu erzielen. Die Menge an Superabsorber, die für eine ausreichende Klebleistung nötig ist, hängt dabei von der Art des Superabsorbers, von der Härte der Klebemasse, von dem zu erreichenden Leistungsvermögen und auch vom Untergrund ab, um nur einige Einflüsse zu nennen. Bei Verwendung der Superabsorber ist ebenso die Teilchengröße auf das Produktdesign abzustimmen. Häufig können durch Vermahlungen deutlich kleinere Teilchengrößen als 1 mm erreicht werden, so dass der Einsatz in Haftklebestreifen, die üblicherweise eine Haftklebemassen-Schichtdicke von 1 mm besitzen, möglich ist.

Die Herstellung und Verarbeitung der Haftklebemassen kann aus Lösung sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren. Besonders bevorzugt ist die kontinuierliche Fertigung der Haftklebemasse mit Hilfe eines Extruders und anschließender Beschichtung direkt auf das zu beschichtende Substrat bei entsprechend hoher Temperatur der Klebmasse. Als Beschichtungsverfahren werden Extrusionsbeschichtung mit Breitschlitzdüsen und Kalanderbeschichtung bevorzugt.

Wenn die Haftklebemassen ein wasserklar transparentes Erscheinungsbild aufweisen sollen, so sind Klebharze zu nutzen, die bei einer Einsatzkonzentration von 50 Gew.-% und einer Schichtstärke von 500 µm eine Eigenfarbe von 2,0, gemessen entsprechend der Gardner-Farbskala, nicht überschreiten. In geringeren Mengen genutzte Klebharze können entsprechend ihrer Einsatzkonzentration auch Eigenfarben > Gardner 2,0 aufweisen. Nach DIN ISO 4630 (1982-11) ist die Gardner-Farbzahl eine Farbzahl für die Kennzeichnung der Farbe von klaren Flüssigkeiten (zum Beispiel Bindemittel für Lacke und Beschichtungsstoffe). Sie wird ermittelt durch visuellen Vergleich der Farbe einer Probe in einem Glasrohr mit der Farbe von definierten Farbstandards. Die Farbe der Probe, die dem jeweiligen Farbstandard am nächsten kommt, wird als Gardner-Farbzahl bezeichnet. Als Bezugsstandards der Gardner-Farbskala dienen 18 Glas-Farbstandards mit jeweils definierten Normfarbwertanteilen und Lichtdurchlässigkeiten.

Die erfindungsgemäß eingesetzte Klebemasse weist im Gegensatz zu Klebemassen aus hydrierten Styrolblockcopolymeren sehr hohe Haftkräfte auf und muss nicht durch Füllstoffe oder Pigmente vor Licht geschützt werden. Sie weist gegenüber allen Styrolblockcopolymeren, wie sie bisher für solche Anwendungen eingesetzt werden, den Vorteil einer sehr hohen Wärmescherfestigkeit auf. Klebemassen aus Styrolblockcopolymeren erweichen selbst unter Verwendung von Endblockverstärkern schon deutlich bei 70 °C während die erfindungsgemäßen Massen auch noch etwas oberhalb von 100 °C scherstabil sind.

Erfindungsgemäß eingesetzte Haftklebemassen können sowohl für einschichtige durch dehnendes Verstrecken rückstands- und zerstörungsfrei wiederablösbare Selbstklebebänder (zum Beispiel entsprechend DE 33 31 016 C2 oder DE 42 22 849 C1 oder WO 98/03601 A1) als auch für mehrschichtige Selbstklebebänder ohne oder mit Schaumstoffzwischenträger (zum Beispiel entsprechend DE 197 08 366 A1, DE 198 20 858 A1, WO 92/11333 A1, DE 196 49 727 A1, DE 196 49 728 A1, DE 196 49 729 A1, DE 197 20 145 A1, US 5,516,581 A oder WO 95/06691 A1) verwendet werden.

Bevorzugt ist, wenn der Haftklebstreifen einschichtig ist.

Im Falle der Verwendung in mehrschichtigen Selbstklebebändern entsprechend DE 197 08 366 A1 können erfindungsgemäße Haftklebemassen sowohl die mittlere, innere Schicht als auch die äußeren Schichten der Klebestreifen bilden.

Werden erfindungsgemäße Klebmassen als äußere Schichten eingesetzt, können innen liegende Schichten wahlweise aus Klebemassen basierend auf anderen Elastomeren aufgebaut sein. Im letzteren Fall enthalten die außen liegenden Haftklebstoffschichten typischerweise UV-Schutzmittel, zum Beispiel UV-Absorber, welche die UV-Belastung der innen liegenden Schichten reduzieren.

Ein Vorteil der Verwendung mehrschichtiger Produktaufbauten entsprechend DE 197 08 366 A1 besteht in der Möglichkeit, durch geeignete Rezeptierung der inneren Klebstoffschichten zum Beispiel die Stripkräfte weitestgehend unabhängig von den Klebeigenschaften zu steuern.

Vorzugsweise weist der Haftklebstreifen eine Trägerschicht aus einem elastischen Träger oder aus einem Schaum auf.

Vorgenannte schaumstoffzwischenträgerhaltige Produktaufbauten entsprechend DE 196 49 727 A1, DE 196 49 728 A1, DE 196 49 729 A1, DE 197 20 145 A1, US 5,516,581 A oder WO 95/06691 A1 sind ebenfalls geeignet, sind aber infolge der Lichtstreuung an den Schaumstoffporen nicht transparent. Klebestreifen können entsprechend DE 44 28 587 C2 und US 5,925,459 A ausgeformt beziehungsweise gemäß DE 44 31 914 C2 modifiziert sein. Erfindungsgemäße Haftklebemassen können ebenfalls in Produkten entsprechend DE 43 39 604 C2 genutzt werden.

Die Dicke der Klebemasseschicht beziehungsweise die Summe der Dicke der Klebemasseschichten beträgt vorzugsweise 400 bis 2000 µm.

Erfindungsgemäß eingesetzte Haftklebemassen können sowohl für einseitig als auch für beidseitig haftklebrige durch dehnendes Verstrecken rückstandsfrei und zerstörungsfrei wiederablösbare Selbstklebebänder genutzt werden. Einseitig haftklebrige Selbstklebebänder können hierbei zum Beispiel durch einseitige Inertisierung oben genannter beidseitig haftklebriger Selbstklebebänder beziehungsweise Selbstklebestreifen erhalten sein.

Typische Konfektionierformen von den die Haftklebemassen nutzenden Selbstklebebändern sind Klebebandrollen sowie Klebestreifen, wie sie zum Beispiel in Form von Stanzlingen erhalten werden. Optional enthalten Stanzlinge einen nicht haftklebrigen Anfasserbereich, von welchem aus der Ablöseprozess ausgeführt werden kann. Bevorzugte Formen weisen die größte Breite in der Nähe des Anfassers auf und die geringste Breite am gegenüberliegenden Ende, laufen also zum Beispiel konisch (das heißt in Form der ebenen Projektion eines Konus) zu.

### Prüfmethoden

Die Messungen werden, wenn nicht anders angegeben, bei einem Prüfklima von 23 ± 1 °C und 50 ± 5 % rel. Luftfeuchte durchgeführt.

Die Dichte des Ethylenpolymers wird nach ISO 1183 ermittelt und in g/cm³ ausgedrückt.

Der Schmelzindex wird nach ISO 1133 bei 190 °C und 2,16 kg geprüft und in g/10 min ausgedrückt.

Der Kristallitschmelzpunkt (T_{cr}) wird mit DSC bei einer Aufheizrate von 10 °C/min nach ISO 3146 ermittelt.

Der Biegemodul (flexural modulus) ist nach ASTM D 790 (Sekantenmodul bei 2 % Dehnung) zu bestimmen.

### Herstellung und Prüfung der Prüfkörper

Die Haftklebemassen werden in einem heizbaren Kneter mit Sigma-Schaufel (Werner und Pfleiderer LUK 1,0 K3 ausgerüstet mit einem Thermostaten LTH 303 der Firma mgw LAUDA) bei einer Temperatur von +160 °C bis +180 °C und unter Inertisierung mit CO₂ als Schutzgas zu einer homogenen Mischung verarbeitet. Nach dem Erkalten werden durch ca. 10-minütiges Verpressen der Klebmasse bei +120 °C bis +140 °C in einer temperierbaren Presse (Typ KHL 50 der Firma Bucher-Guyer) einschichtige Klebstoff-Folienstücke hergestellt. Die Dicke der Folien betragt für einen einschichtigen Aufbau 700 µm, für einen Mehrschichtaufbau für die Innenschicht 500 µm ± 50 µm und für die Außenschichten 100 µm ± 20 µm.

Für die Bestimmung der Stripfähigkeit werden 20 Prüfkörper von 20 mm Breite und 50 mm Länge hergestellt. Als Anfasser werden an einem Ende beide Seiten mit einer 20 mm mal 20 mm großen 25 µm Polyesterfolie abgedeckt. Das gegenüber liegende Ende wird konisch zugeschnitten, wobei die Spitze eine Breite von 2 mm aufweist und der Konus 20 mm lang ist, so dass zwischen dem Anfasser und dem Beginn des Konus die Probe auf 10 mm Länge 20 mm breit bleibt. Die Probe wird so zwischen zwei Glasplatten verklebt, dass die Klebemasse völlig abgedeckt ist und nur der Anfasser herausragt. Nach den 10 Tagen Lagerung werden die 20 Prüflinge durch Ziehen gelöst, wobei in einem Winkel von 15° gezogen wurde. Notiert wird die Anzahl der abgerissenen Klebestreifen.

Um die UV-Beständigkeit zu testen, werden jeweils 20 rechteckige Klebestreifen der Abmessungen 20 mm x 50 mm, versehen mit einem Anfasser wie oben beschrieben, auf eine Glasplatte verklebt. Der mit einer UV-undurchlässigen Abdeckung versehene Anfasser steht dabei aus der Klebfuge heraus. Anschließend wird Papier der Abmessung 40 mm x 40 mm auf den Klebestreifen geklebt und mit einer Kraft von 100 N angedrückt. Die Klebestreifen werden dann 10 Tage in einem UV-Tester der Firma Atlas so gelagert, dass das UV-Licht durch die Glasplatte auf den Klebestreifen fallen kann. Die Bestrahlungsdosis liegt bei 500 W/m², die Schwarzstandardtemperatur beträgt 25 °C. Nach den 10 Tagen Lagerung werden die Klebestreifen durch Ziehen gelöst, wobei in einem Winkel von 15° gezogen wird. Notiert wird die Anzahl der abgerissenen Klebestreifen.

Im Folgenden wird die Erfindung durch einige Beispiele näher erläutert ohne die Erfindung damit einschränken zu wollen.

Rohstoffe der Beispiele:
- IN FUSE 9107:: Copolymer aus Ethylen und Octen-(1), Schmelzindex 1 g/10min, Dichte 0,866 g/cm³, Biegemodul 15,5 MPa, Kristallitschmelzpunkt 121 °C
- IN FUSE 9007:: Copolymer aus Ethylen und Octen-(1), Schmelzindex 0,5 g/10min, Dichte 0,866 g/cm³, Biegemodul 15,5 MPa, Kristallitschmelzpunkt 119 °C
- Vector 4211:: Styrol-Isopren-Styrol Copolymer
- LD 251:: LDPE, Schmelzindex 8 g/10min, Dichte 0,9155 g/cm³, Biegemodul 180 MPa, Kristallitschmelzpunkt 104 °C
- Engage 7467:: Copolymer aus Ethylen und Buten-(1), Schmelzindex 1,2 g/10min, Dichte 0,862 g/cm³, Biegemodul 4 MPa, Kristallitschmelzpunkt 34 °C
- Buna EP G 3440:: EPDM, Dichte von 0,86 g/cm³, Mooney-Viskosität 28, 48 Gew.-% Ethylen, 48 Gew.-% Propylen und 4 Gew.-% Dien
- Ondina 933:: Weißöl (paraffinisch-naphthenisches Mineralöl)
- PB 0300 M:: Polybuten, Schmelzindex 4 g/10min, Dichte 0,915 g/cm³, Biegemodul 450 MPa, Kristallitschmelzpunkt 116 °C
- Regalite 1100:: hydriertes aromatisches Kohlenwasserstoffharz mit einem
- (= Regalite R1100): Schmelzpunkt von 100 °C und einer Polydispersität von 1,6
- Foral 85:: voll hydrierter Glycerinester des Kolophoniums mit einem Schmelzpunkt von 85 °C und einer Polydispersität von 1,2
- PRO 10493:: nicht hydriertes C₅-Kohlenwasserstoffharz mit einem Schmelzpunkt von 98 °C und einer Polydispersität von 2,0
- Irganox 1726:: phenolisches Antioxidans mit Schwefel basierter Funktion eines sekundären Antioxidans
- Irganox 1076:: phenolisches Antioxidans
- Irganox PS 802:: Schwefel basiertes sekundäres Antioxidans
- Tinuvin 622:: UV-Stabilisator auf HALS-Basis
- Tinuvin: P: UV-Absorber
- Eastotac H130R:: nicht hydriertes C₅-Kohlenwasserstoffharz, Polydispersität von 2,1, Schmelzpunkt 130 °C

### Beispiel 1

Einschichtiger Aufbau (700 µm Dicke):
Die Klebemasse besteht aus folgenden Komponenten: 100 phr IN FUSE 9107, 78,4 phr Ondina 933, 212 phr PRO 10493, 8 phr Irganox 1726 und 5 phr Tinuvin 622.
Stripfähigkeit: ein Abriss
UV-Test: 2 Abrisse

### Beispiel 2

Einschichtiger Aufbau (700 µm Dicke):
Die Klebemasse besteht aus folgenden Komponenten: 100 phr IN FUSE 9007, 78,4 phr Ondina 933, 212 phr Regalite 1100, 8 phr Irganox 1076, 2 phr Tinuvin 622 und 5 phr
Tinuvin P. Stripfähigkeit: kein Abriss
UV-Test: kein Abriss

### Beispiel 3

Mehrschichtaufbau:
Mittelschicht (500 µm): 100 phr IN FUSE 9007, 100 phr Engage 7467, 425 phr Regalite 1100, 6 phr Irganox 1076 und 6 phr Tinuvin P
Außenschichten (je 100 µm): 100 phr IN FUSE 9007, 212 phr Regalite 1100, 3 phr Irganox 1076 und 3 phr Tinuvin P
Stripfähigkeit: kein Abriss
UV-Test: 1 Abriss

### Beispiel 4

Einschichtiger Aufbau (700 µm Dicke):
Die Klebemasse besteht aus folgenden Komponenten: 100 phr IN FUSE 9007, 100 phr Buna EP G 3440, 425 phr Foral 85, 8 phr Irganox 1076, 2 phr Tinuvin 622 und 5 phr
Tinuvin P. Stripfähigkeit: 2 Abrisse
UV-Test: 2 Abrisse

### Vergleichsbeispiel 1

Einschichtiger Aufbau (700 µm Dicke):
Die Klebemasse besteht aus folgenden Komponenten: 100 phr Vector 4211, 100 phr Regalite 1100, 0,5 phr Irganox 1076 und 0,5 phr Tinuvin P.
Stripfähigkeit: ein Abriss
UV-Test: 18 Abrisse

### Vergleichsbeispiel 2

Einschichtiger Aufbau (700 µm Dicke):
Die Klebemasse besteht aus folgenden Komponenten:100 phr LD 251, 78,4 phr Ondina 933, 212 phr Eastotac H130R, 8 phr Irganox 1726.
Die Masse ist nicht haftklebrig, sondern hart mit öliger Oberfläche.

### Vergleichsbeispiel 3

Einschichtiger Aufbau (700 µm Dicke):
Die Klebemasse besteht aus folgenden Komponenten: 100 phr Engage 7467, 78,4 phr Ondina 933, 212 phr Escorez 1310, 8 phr Irganox 1726.
Die Beschichtung ist sehr weich und klebrig.
Stripfähigkeit: 20 Abrisse
UV-Test: 20 Abrisse

### Vergleichsbeispiel 5

Einschichtiger Aufbau (700 µm Dicke):
Die Klebemasse besteht aus folgenden Komponenten: 100 phr IN FUSE 9107, 78,4 phr PB 0300 M, 212 phr Escorez 1310, 8 phr Irganox 1076.
Die Masse ist kaum haftklebrig.

## Patentansprüche

1. Verwendung einer Haftklebemasse in einem Haftklebstreifen aus mindestens einer Schicht, der sich durch dehnendes Verstrecken im Wesentlichen in der Verklebungsebene rückstands- und zerstörungsfrei wieder ablösen lässt, wobei mindestens eine Schicht aus der Haftklebemasse gebildet wird, die besteht aus einem Ethylenpolymeren mit einer Dichte zwischen 0,86 und 0,89 g/cm³, vorzugsweise zwischen 0,86 und 0,88 g/cm³, besonders bevorzugt zwischen 0,86 und 0,87 g/cm³ und einem Kristallitschmelzpunkt von mindestens 105 °C, vorzugsweise mindestens 115 °C und mindestens einem Klebharz, wobei das Ethylenpolymer
- einen Schmelzindex von weniger als 6 g/10 min,
- einen Biegemodul von weniger als 26 MPa aufweist und/oder
- ein C₃- bis C₁₀-Olefin enthält.

2. Verwendung nach Anspruch 1,
**dadurch gekennzeichnet, dass**
das Ethylenpolymer
- einen Schmelzindex von weniger als 1,5 g/10 min,
- einen Biegemodul von weniger als 17 MPa aufweist und/oder
- 1-Octen enthält.

3. Verwendung nach Anspruch 1 oder 2,
**dadurch gekennzeichnet, dass**
das Klebharz der Klebmasse gewählt ist aus der Gruppe
- der Harze auf Basis von Kolophonium oder Kolophoniumderivaten vorzugsweise partiell oder vollständig hydriert,
- der Kohlenwasserstoffharze auf Basis von C₅-Monomeren vorzugsweise partiell oder vollständig hydriert,
- der aromatenhaltigen Kohlenwasserstoffharze vorzugsweise partiell oder vollständig hydriert,
- der Kohlenwasserstoffharze auf Basis von Cyclopentadien-Polymeren, vorzugsweise partiell oder vollständig hydriert,
und/oder
- der Harze auf Basis von Polyterpenen, vorzugsweise partiell oder vollständig hydriert,
oder aus einem Gemisch der genannten Harze besteht.

4. Verwendung nach zumindest einem der Ansprüche 1 bis 3,
**dadurch gekennzeichnet, dass**
die Klebemasse einen Weichmacher aus der Gruppe
- der flüssigen Polymerisate aus reinem Isobuten,
- der flüssigen Copolymerisate aus Isobuten mit Buten und/oder
- der Ester der Phthal-, Trimellit-, Zitronen- oder Adipinsäure enthält.

5. Verwendung nach zumindest einem der vorhergehenden Ansprüche,
**dadurch gekennzeichnet, dass**
die Klebemasse ein Copolymer aus Ethylen und Buten-(1), Hexen-(1) oder Octen-(1) oder ein Terpolymer aus Ethylen, Propylen und Buten-(1), Hexen-(1) oder Octen-(1) enthält, wobei der Biegemodul des Copolymers oder Terpolymers vorzugsweise unter 10 MPa und der Kristallitschmelzpunkt vorzugsweise unter 50 °C liegt, oder ein EPM oder EPDM enthält, vorzugsweise mit einem Ethylengehalt von 40 bis 70 Gew.-% und/oder einer Dichte unter 0,88 g/cm³, besonders bevorzugt unter 0,87 g/cm³.

6. Verwendung nach zumindest einem der vorhergehenden Ansprüche,
**dadurch gekennzeichnet, dass**
der Haftklebstreifen einschichtig ist.

7. Verwendung nach Anspruch 6,
**dadurch gekennzeichnet, dass**
der Haftklebstreifen eine Dicke von 400 µm bis 2000 µm aufweist.

8. Verwendung nach zumindest einem der vorhergehenden Ansprüche,
**dadurch gekennzeichnet, dass**
der Haftklebstreifen eine Trägerschicht aus einem elastischen Träger aufweist.

9. Verwendung nach zumindest einem der vorhergehenden Ansprüche,
**dadurch gekennzeichnet, dass**
der Haftklebstreifen eine Trägerschicht aus einem Schaum aufweist.

10. Verwendung nach zumindest einem der vorhergehenden Ansprüche,
**dadurch gekennzeichnet, dass**
die Summe der Dicke der Klebemasseschichten in einem mehrschichtigen Haftklebstreifen 400 bis 2000 µm beträgt.

## Claims

1. Use of a pressure-sensitive adhesive in an adhesive strip comprising at least one layer, the strip being redetachable without residue or destruction by extensive stretching substantially in the bond plane, at least one layer being formed of the pressure-sensitive adhesive, which consists of an ethylene polymer having a density of between 0.86 and 0.89 g/cm³, preferably between 0.86 and 0.88 g/cm³, more preferably between 0.86 and 0.87 g/cm³, and having a crystallite melting point of at least 105°C, preferably at least 115°C, and of at least one tackifier resin, where the ethylene polymer
- has a melt index of less than 6 g/10 min,
- has a flexural modulus of less than 26 MPa and/or
- comprises a C₃ to C₁₀ olefin.

2. Use according to Claim 1,
**characterized in that**
the ethylene polymer
- has a melt index of less than 1.5 g/10 min,
- has a flexural modulus of less than 17 MPa and/or
- comprises 1-octene.

3. Use according to Claim 1 or 2,
**characterized in that**
the tackifier resin of the adhesive is selected from the group
- of resins based on rosin or rosin derivatives, preferably partially or fully hydrogenated,
- of hydrocarbon resins based on C₅ monomers, preferably partially or fully hydrogenated,
- of aromatic-containing hydrocarbon resins, preferably partially or fully hydrogenated,
- of hydrocarbon resins based on cyclopentadiene polymers, preferably partially or fully hydrogenated,
and/or
- of resins based on polyterpenes, preferably partially or fully hydrogenated,
or consists of a mixture of the stated resins.

4. Use according to at least one of Claims 1 to 3, **characterized in that**
the adhesive comprises a plasticizer from the group
- of the liquid polymers of pure isobutene,
- of the liquid copolymers of isobutene with butene and/or
- of the esters of phthalic, trimellitic, citric or adipic acid.

5. Use according to at least one of the preceding claims,
**characterized in that**
the adhesive comprises a copolymer of ethylene and but-1-ene, hex-1-ene or oct-1-ene, or a terpolymer of ethylene, propylene and but-1-ene, hex-1-ene or oct-1-ene, the flexural modulus of the copolymer or terpolymer being preferably below 10 MPa and the crystallite melting point being preferably below 50°C, or comprises an EPM or EPDM, preferably having an ethylene content of 40 to 70 wt% and/or a density of below 0.88 g/cm³, more preferably below 0.87 g/cm³.

6. Use according to at least one of the preceding claims,
**characterized in that**
the adhesive strip is single-layered.

7. Use according to Claim 6,
**characterized in that**
the adhesive strip has a thickness of 400 µm to 2000 µm.

8. Use according to at least one of the preceding claims,
**characterized in that**
the adhesive strip has a carrier layer composed of an elastic carrier.

9. Use according to at least one of the preceding claims,
**characterized in that**
the adhesive strip has a carrier layer composed of a foam.

10. Use according to at least one of the preceding claims,
**characterized in that**
the sum of the thickness of the layers of adhesive in a multi-layer adhesive strip is 400 to 2000 µm.

## Revendications

1. Utilisation d'une composition adhésive de contact dans une bande adhésive de contact constituée d'au moins une couche, qui peut être redécollée par étirage essentiellement dans le plan du collage sans laisser de résidu et sans détérioration, au moins une couche de la composition adhésive de contact étant formée, qui est constituée par un polymère d'éthylène ayant une densité comprise entre 0,86 et 0,89 g/cm³, de préférence entre 0,86 et 0,88 g/cm³, de manière particulièrement préférée entre 0,86 et 0,87 g/cm³, et un point de fusion des cristallites d'au moins 105 °C, de préférence d'au moins 115 °C, et au moins une résine adhésive, le polymère d'éthylène
- présentant un indice de fusion de moins de 6 g/10 min,
- un module de flexion de moins de 26 MPa et/ou
- contenant une oléfine en C₃ à C₁₀.

2. Utilisation selon la revendication 1, **caractérisée en ce que** le polymère d'éthylène
- présente un indice de fusion de moins de 1,5 g/10 min,
- un module de flexion de moins de 17 MPa et/ou
- contient du 1-octène.

3. Utilisation selon la revendication 1 ou 2, **caractérisée en ce que** la résine adhésive de la composition adhésive est choisie dans le groupe constitué par :
- les résines à base de colophane ou de dérivés de colophane, de préférence partiellement ou complètement hydrogénées,
- les résines hydrocarbonées à base de monomères en C₅, de préférence partiellement ou complètement hydrogénées,
- les résines hydrocarbonées contenant des groupes aromatiques, de préférence partiellement ou complètement hydrogénées,
- les résines hydrocarbonées à base de polymères de cyclopentadiène, de préférence partiellement ou complètement hydrogénées,
et/ou
- les résines à base de polyterpènes, de préférence partiellement ou complètement hydrogénées,
ou est constituée d'un mélange des résines mentionnées.

4. Utilisation selon au moins l'une quelconque des revendications 1 à 3, **caractérisée en ce que** la composition adhésive contient un plastifiant du groupe constitué par :
- les polymères liquides d'isobutène pur,
- les copolymères liquides d'isobutène avec du butène et/ou
- les esters de l'acide phtalique, trimellitique, citrique ou adipique.

5. Utilisation selon au moins l'une quelconque des revendications précédentes, **caractérisée en ce que** la composition adhésive contient un copolymère d'éthylène et de butène-(1), d'hexène-(1) ou d'octène-(1), ou un terpolymère d'éthylène, de propylène et de butène-(1), d'hexène-(1) ou d'octène-(1), le module de flexion du copolymère ou du terpolymère étant de préférence inférieur à 10 MPa et le point de fusion des cristallites étant de préférence inférieur à 50 °C, ou contient un EPM ou un EPDM, de préférence ayant une teneur en éthylène de 40 à 70 % en poids et/ou une densité inférieure à 0,88 g/cm³, de manière particulièrement préférée inférieure à 0,87 g/cm³.

6. Utilisation selon au moins l'une quelconque des revendications précédentes, **caractérisée en ce que** la bande adhésive de contact est monocouche.

7. Utilisation selon la revendication 6, **caractérisée en ce que** la bande adhésive de contact présente une épaisseur de 400 µm à 2 000 µm.

8. Utilisation selon au moins l'une quelconque des revendications précédentes, **caractérisée en ce que** la bande adhésive de contact comprend une couche support en un support élastique.

9. Utilisation selon au moins l'une quelconque des revendications précédentes, **caractérisée en ce que** la bande adhésive de contact comprend une couche support en une mousse.

10. Utilisation selon au moins l'une quelconque des revendications précédentes, **caractérisée en ce que** la somme de l'épaisseur des couches de composition adhésive dans une bande adhésive de contact multicouche est de 400 à 2 000 µm.
